# FASCICULE DE BREVET EUROPEEN

(11) **EP 1 469 138 B1**
(45) Date de publication et mention de la délivrance du brevet: **08.02.2006**
(21) Numéro de dépôt: 03405268.8
(22) Date de dépôt: 16.04.2003
(51) Int. Cl.: E04D 13/08, E03B 3/03, G05D 9/02

(54) **Collecteur d'eau de pluie**
Regenwassersammler
Rain water collector

(43) Date de publication de la demande: 20.10.2004
(73) Titulaire: Luciani, Bruno, 2034 Peseux (CH)
(72) Inventeur: Luciani, Bruno, 2034 Peseux (CH)
(74) Mandataire: GLN

(56) Documents cités:
- DE-A- 19 528 393
- DE-U- 8 514 204
- GB-A- 2 248 262

## Description

La présente invention concerne un collecteur permettant de diriger, de façon régulée, un fluide s'écoulant dans un conduit vertical. Il est entendu que le mot fluide, selon la définition du dictionnaire, couvre, généralement, tout milieu continu déformable, tel qu'un liquide ou du sable, de la graine, une poudre.

L'invention trouve une application particulièrement intéressante pour la récupération dans un réservoir l'eau de pluie tombée sur une toiture.

Tandis que la consommation d'eau courante potable est en hausse continue, les réserves des nappes phréatiques s'amenuisent et des moyens d'économie doivent être mis en oeuvre. Dans ce but, la récupération des eaux de pluie est une démarche particulièrement intéressante. Il n'est, en effet, pas nécessaire d'utiliser de l'eau potable pour arroser le jardin ou pour alimenter une chasse d'eau.

Le document DE 195 28 393 A1 décrit un dispositif selon le préambule de la revendication 1.

Il existe déjà de nombreux systèmes procurant un tel résultat. Par exemple, la demande de brevet FR 96 07195, publié sous le numéro FR 2 749 599, décrit un dispositif récupérant l'eau de pluie dans une cuve de rétention placée sur la descente du chêneau et alimentant une chasse d'eau située en aval. Cependant, lorsque la cuve est pleine, l'eau en excès s'évacue par un simple trop plein, relié au caniveau. Cela nécessite d'intégrer le système dès la conception du circuit d'eau de l'habitation ou alors de lui faire subir des aménagements relativement coûteux.

Le document GB 2 231 907 propose, quant à lui, d'insérer un réservoir directement sur le tuyau de descente du chêneau. Un déflecteur dévie le flux d'eau circulant dans le tuyau vers le réservoir. Lorsque celui-ci est plein, l'eau en excès déborde dans la descente et s'écoule vers le caniveau. Il n'est cependant pas très esthétique d'affubler de cuves le mur de sa maison. Il n'est, par ailleurs, pas possible d'enterrer la cuve, puisqu'un robinet placé vers son fond doit permettre de la vider.

La présente invention propose un dispositif qui permet de s'adapter simplement sur une installation existante sans utiliser de circuit complexe pour acheminer l'eau en excès et permettant de délocaliser la cuve d'un réservoir.

De façon plus précise, l'invention concerne un dispositif permettant de diriger automatiquement vers un réservoir, un fluide s'écoulant dans un tuyau vertical, caractérisé en ce qu'il comporte, insérés dans une portion de ce tuyau :
- un réceptacle mobile possédant un orifice auquel peut être connecté un conduit d'évacuation vers le réservoir,
- un entonnoir disposé au-dessus du réceptacle, pour être fixé à la paroi du tuyau par sa partie de plus grand diamètre et encerclant le réceptacle de manière coulissante par sa partie de plus petit diamètre qui est percée d'une pluralité d'ouvertures pour déboucher dans le tuyau, et
- des moyens de commande pour rendre le réceptacle élastiquement solidaire du tuyau de manière à ce que, selon la hauteur de la colonne de fluide pesant sur ledit réceptacle, celui-ci ferme ou non lesdites ouvertures permettant ainsi respectivement d'envoyer ou non le fluide vers le réservoir.

Le dispositif est particulièrement destiné à récupérer l'eau de pluie tombant sur un toit, collectée dans un chêneau et évacuée par un tuyau de descente.

L'invention concerne aussi un système comportant le dispositif mentionné ci-dessus et la portion du tuyau de descente dans laquelle sont insérés le réceptacle, l'entonnoir et à laquelle sont reliés les moyens de commande. Avantageusement, cette portion de tuyau est séparable du reste de ce tuyau.

Selon un mode de réalisation avantageux, les moyens de commande comportent :
- deux bras rigides horizontaux fixés au réceptacle par une de leurs extrémités et traversant la paroi du tuyau de descente par deux ouvertures dont la dimension correspond sensiblement à la course du réceptacle,
- deux ressorts fixés, par une extrémité, à l'autre extrémité de ces bras, et
- un support fixe solidaire du tuyau, auquel sont fixés les ressorts par leur autre extrémité.

D'autres caractéristiques apparaîtront à la lecture de la description qui suit, faite en référence au dessin annexé dans lequel :
- la figure 1 est une vue schématique d'un toit équipé d'un ensemble selon l'invention, et
- les figures 2 et 3 sont des représentations détaillées de l'ensemble, en coupe axiale, dans ses deux positions extrêmes, haute et basse.

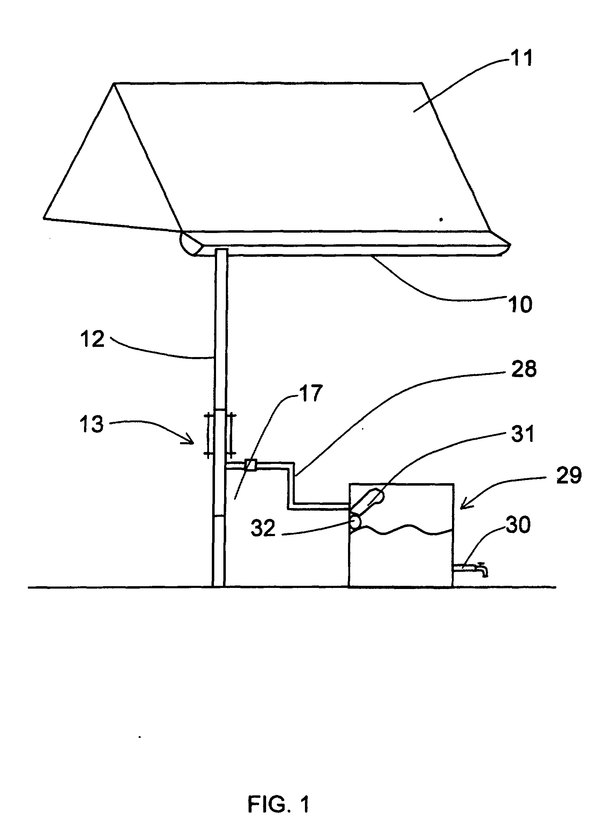

Sur la figure 1, on a représenté en 10 un chêneau horizontal disposé à la base d'un toit 11 pour recevoir l'eau de pluie et la conduire à un tuyau vertical d'axe AA, dit tuyau de descente 12, qui l'évacue vers un caniveau, non représenté sur le dessin.

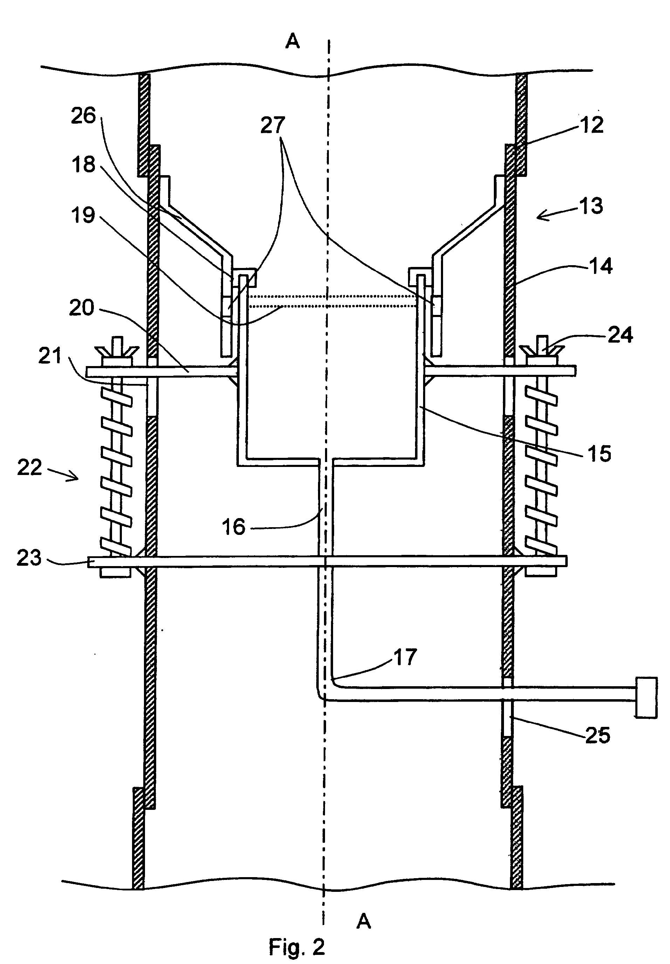

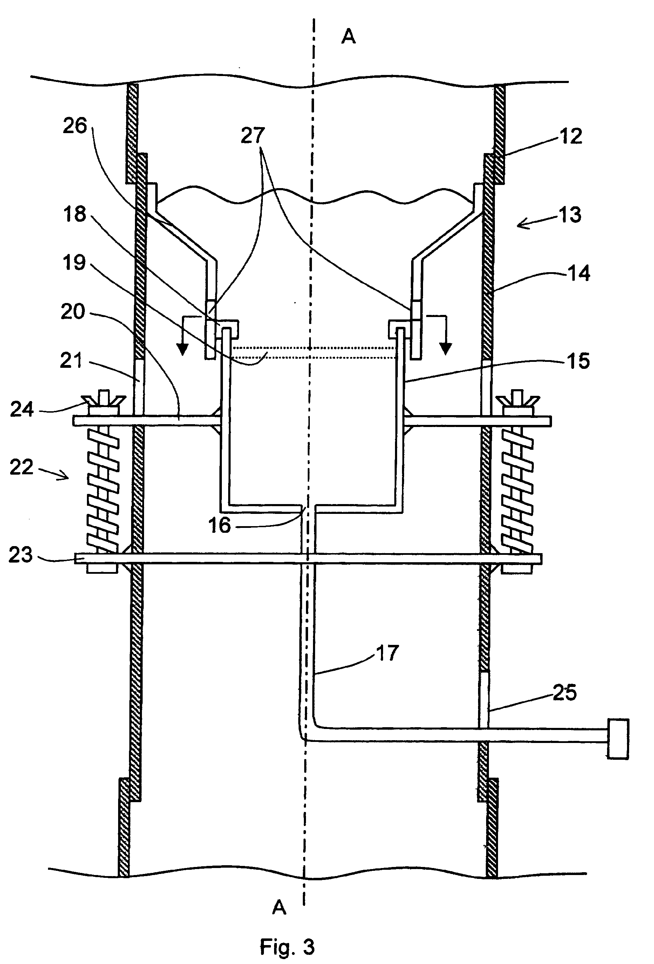

L'ensemble selon l'invention, représenté schématiquement en 13 sur la figure 1 et montré en détail sur les figures 2 et 3, est inséré dans le tuyau de descente 12 à la place d'un secteur de celui-ci qui a été enlevé.

Le collecteur 13 comporte un tuyau 14 de diamètre légèrement inférieur à celui du tuyau de descente 12 et fixé à lui par tout moyen connu du ferblantier, notamment par rivetage ou par soudage. A titre indicatif, la hauteur du dispositif est d'environ 50 cm.

Le tuyau 14 renferme un réceptacle cylindrique 15 qui lui est coaxial et dont le diamètre est environ égal à la moitié de celui du tuyau. Ce réceptacle possède, dans son fond, un orifice 16 auquel se connecte un tuyau d'évacuation 17. Sa partie supérieure est entourée d'un joint 18 et possède une grille de protection 19 arrêtant les matières solides transportées par l'eau du toit.

Le réceptacle 15 est rendu solidaire du tuyau 14 par des moyens élastiques de manière à pouvoir se déplacer par rapport à lui selon l'axe AA, sur une distance donnée entre une position haute ou position de repos, illustrée sur la figure 2, et une position basse, illustrée sur la figure 3. Ces moyens comportent deux bras rigides horizontaux 20 fixés au réceptacle 15, notamment par soudage ou par vissage, par une de leurs extrémités et traversant la paroi du tuyau 14 par deux ouvertures 21 dont la dimension selon AA correspond sensiblement à la course du réceptacle. L'autre extrémité de chacun des bras 20 est accouplée à une extrémité d'un ressort 22 disposé verticalement à l'extérieur du tuyau 14. La deuxième extrémité de ces ressorts est solidaire d'un support fixe 23 constitué d'une plaque horizontale qui traverse la paroi du tuyau 14 auquel elle fixée, notamment par soudage. La longueur des ressorts au repos est modulable, par exemple, au moyen de boulons et écrous à ailettes 24.

Pour permettre la translation du réceptacle 15, le tuyau 17 traverse la paroi du tuyau 14 par une ouverture 25 ayant, selon AA, sensiblement la même dimension que les ouvertures 21.

Par ailleurs, un entonnoir 26 est disposé juste au dessus du réceptacle 15, de manière à y diriger l'eau provenant de la descente de chêneau 12. Il est fixé à la paroi intérieure du tuyau 14 par sa partie de plus grand diamètre, tandis que sa partie de plus petit diamètre encercle de manière coulissante le sommet du réceptacle. Le joint 18 garantit une bonne étanchéité de la liaison.

L'entonnoir 26 est percé, dans sa partie encerclant le réceptacle 15, d'une pluralité d'ouvertures 27 débouchant dans le tuyau 14 et situées en dessous du sommet du réceptacle lorsque celui-ci est dans sa position de repos, c'est-à-dire quand les ressorts 22 ne sont pas comprimés.

Comme on peut le voir sur la figure 1, le tuyau d'évacuation 17 peut être connecté en aval, par un conduit 28, à une cuve réservoir 29. Celle-ci est munie, dans sa partie inférieure, d'un robinet 30 et, avantageusement, d'un clapet 31 commandé par un flotteur 32 permettant d'obturer le conduit 28 lorsqu'elle est pleine. Un tel système de fermeture par clapet et flotteur est décrit plus précisément dans le brevet US 6 182 680.

Ainsi, par temps de pluie, l'eau tombant sur le toit 11 est dirigée dans la descente de chêneau 12 et tombe dans l'entonnoir 26 pour se déverser dans le réceptacle 15 qui l'envoie vers le réservoir 29.

La figure 2 illustre l'état du dispositif lorsque le réservoir 29 n'est pas plein et que le clapet 31 laisse ouverte l'arrivée du conduit 28. Le réceptacle 15 est donc vide et, sous l'action des ressorts 22, occupe sa position de repos.

Mais quand le réservoir 29 est plein, le clapet 31 obture son entrée. L'eau de pluie commence alors à remplir le conduit 28, puis le tuyau 17, puis le réceptacle 15, puis le tuyau 14. Une colonne d'eau s'accumule et comprime progressivement les deux ressorts 22, provoquant l'abaissement progressif du réceptacle par rapport à l'entonnoir fixe 26.

Il arrive ainsi un moment où, comme montré sur la figure 3, le réceptacle 15 atteint sa position basse pour laquelle son bord découvre les ouvertures 27 de l'entonnoir, permettant alors à la colonne d'eau accumulée de s'écouler, par les ouvertures 27, dans le tuyau 14 et la descente de chêneau 10, vers le caniveau.

Le réceptacle 15, allégé par la diminution de la colonne d'eau, pourra ensuite remonter sous l'effet des ressorts et obturera de nouveau les ouvertures 27, provoquant, à nouveau, l'accumulation d'une colonne d'eau qui fera redescendre le réceptacle, ce mouvement de yo-yo continuant tant que le clapet 31 restera fermé.

Lorsqu'un utilisateur prélève de l'eau dans le réservoir 29 par son robinet 30, le flotteur 32 agit sur clapet 31 qui permet à l'eau contenue dans le réceptacle 15 de s'écouler dans le réservoir. Dès que les ressorts 22 sont soulagés du fait de la réduction du poids de l'eau, ils font remonter le réceptacle 15 qui retrouve sa position haute, montrée à la figure 2, dans laquelle les ouvertures 27 sont masquées et autorisent à nouveau son remplissage.

Bien entendu, la hauteur de la colonne d'eau provoquant le dégagement des ouvertures 27 peut être ajustée en jouant sur la longueur des ressorts 22. C'est ainsi que ce dégagement peut avoir lieu, comme décrit, lorsque l'eau a déjà un certain niveau dans le tuyau de descente 12 mais également dès que le réceptacle 15 est plein. Dans le premier cas, une importante colonne d'eau permettra de disposer le réservoir 29 en contre-haut. On notera que dans le deuxième cas, le mouvement de yo-yo n'aura pas lieu et le réceptacle restera en position basse tant que le réservoir 29 est plein.

On notera qu'en cas de fortes précipitations, si le débit d'eau provenant du toit est plus grand que celui s'écoulant par le tuyau 17, la colonne d'eau accumulée permettra d'amener le réceptacle 15 en position basse même si le réservoir 29 n'est pas complètement rempli. Un engorgement du tuyau de descente 12 et du chêneau 10 peut ainsi être évité.

Par ailleurs, il est évident que le diamètre du tuyau 14 du dispositif peut être supérieur à celui du tuyau de descente. C'est alors ce dernier qui est inséré dans le collecteur. Dans ce cas, les extrémités du tuyau 14 peuvent présenter des portions de diamètre croissant par pallier, de manière à s'adapter sur des tuyaux de descente de différentes dimensions. Il suffit alors de couper le tuyau au niveau de la portion de diamètre approprié.

## Revendications

1. Dispositif permettant de diriger automatiquement vers un réservoir (29) un fluide s'écoulant dans un tuyau vertical (12), **caractérisé en ce qu'**il comporte, pour être insérés dans une portion (14) de ce tuyau (12):
- un réceptacle mobile (15) possédant un orifice (16) auquel peut être connecté un conduit (17, 28) d'évacuation du fluide vers le réservoir (29),
- un entonnoir (26) disposé au-dessus du réceptacle (15), pour être fixé à la paroi du tuyau (12, 14) par sa partie de plus grand diamètre et encerclant le réceptacle de manière coulissante par sa partie de plus petit diamètre qui est percée d'une pluralité ouvertures (27) pour déboucher dans le tuyau (12, 14), et
- des moyens de commande (20, 21, 22, 23) pour rendre le réceptacle (15) élastiquement solidaire du tuyau (12) de manière à ce que, selon la hauteur de la colonne de fluide pesant sur ledit réceptacle, celui-ci ferme ou non lesdites ouvertures permettant ainsi respectivement d'envoyer ou non le fluide vers le réservoir (29).

2. Dispositif selon la revendication 1, **caractérisé en ce qu'**il est destiné à récupérer l'eau de pluie tombant sur un toit (11), collectée dans un chêneau (10) et évacuée par un tuyau de descente (12).

3. Système comportant le dispositif selon l'une des revendications 1 et 2 et la portion (14) du tuyau de descente dans laquelle sont insérés le réceptacle (15), l'entonnoir (26) et à laquelle sont reliés les moyens de commande (20, 21, 22, 23), **caractérisé en ce que** cette portion (14) du tuyau est séparable du reste de ce tuyau.

4. Dispositif ou système selon l'une des revendications 1 à 3, **caractérisé en ce que** lesdits moyens de commande comportent :
- deux bras rigides horizontaux (20) fixés au réceptacle (15) par une de leurs extrémités et traversant la paroi du tuyau de descente (12, 14) par deux ouvertures (21),
- deux ressorts (22) fixés, par une extrémité, à l'autre extrémité de ces bras, et
- un support fixe (23) solidaire du tuyau, auquel sont fixés les ressorts (22) par leur autre extrémité.

5. Dispositif ou système selon la revendication 4, **caractérisé en ce que** la dimension desdites ouvertures (21) correspond sensiblement à la course du réceptacle (15).

6. Dispositif ou système selon l'une des revendications 4 et 5, **caractérisé en ce que** la longueur des ressorts (22) au repos est réglable.

7. Dispositif ou système selon l'une des revendications 1 à 6, **caractérisé en ce que** la liaison entre l'entonnoir (26) et le réceptacle (15) comporte un joint d'étanchéité (18).

## Claims

1. Device for automatically directing towards a tank (29) a fluid flowing in a vertical pipe (12), **characterized in that** it comprises, to be inserted in a portion (14) of this pipe (12),
- a mobile receptacle (15) possessing an orifice (16) to which a duct (17, 28) for discharging the fluid to the tank (29) can be connected,
- a hopper (26) arranged above the receptacle (15), to be fixed to the wall of the pipe (12, 14) by its larger-diameter part and encircling the receptacle in a sliding manner via its smaller-diameter part which is pierced with a plurality of openings (27) to open into the pipe (12, 14), and
- control means (20, 21, 22, 23) for elastically securing the receptacle (15) to the pipe (12) in such a way that, depending on the height of the column of fluid bearing down on the said receptacle, the latter closes or does not close the said openings (27) thus respectively allowing the fluid to be dispatched or not to be dispatched towards the tank (29).

2. Device according to Claim 1, **characterized in that** it is intended to collect rainwater falling on a roof (11), collected in a gutter (10) and discharged via a downpipe (12).

3. System comprising the device according to one of Claims 1 and 2 and the portion (14) of the downpipe in which the receptacle (15), the hopper (26) are inserted and to which the control means (20, 21, 22, 23) are connected, **characterized in that** this portion (14) of the pipe can be detached from the remainder of this pipe.

4. Device or system according to one of Claims 1 to 3, **characterized in that** the said control means comprise:
- two horizontal rigid arms (20) fixed to the receptacle (15) by one of their ends and passing through the wall of the downpipe (12, 14) via two openings (21),
- two springs (22) fixed, by one end, to the other end of these arms, and
- a fixed support (23) secured to the pipe, to which the springs (22) are fixed by their other end.

5. Device or system according to Claim 4, **characterized in that** the size of the said openings (21) corresponds more or less to the travel of the receptacle (15).

6. Device or system according to one of Claims 4 and 5, **characterized in that** the length of the springs (22) at rest is adjustable.

7. Device or system according to one of Claims 1 to 6, **characterized in that** the connection between the hopper (26) and the receptacle (15) includes a seal (18).

## Patentansprüche

1. Vorrichtung, die es ermöglicht, eine sich in einem vertikalen Rohr (12) ergießende Flüssigkeit automatisch in ein Reservoir (29) zu leiten, **dadurch gekennzeichnet, dass** sie folgende, zum Einbau in einen Abschnitt (14) dieses Rohrs (12) vorgesehene Elemente umfasst:
- einen beweglichen Behälter (15), der mit einer Öffnung (16) versehen ist, an die eine Leitung (17, 28) zum Ableiten der Flüssigkeit in das Reservoir (29) angeschlossen werden kann,
- einen über dem Behälter (15) angeordneten Trichter (26), der an seinem größeren Umfang zur Befestigung an der Wand des Rohres (12, 14) vorgesehen ist und an seinem kleineren, von einer Mehrzahl von Öffnungen (27) zur Ausmündung in das Rohr (12, 14) durchdrungenen Umfang den Behälter axial gleitend umschließt, und
- Steuerungsmittel (20, 21, 22, 23), um den Behälter (15) so mit dem Rohr (12) elastisch zu verbinden, dass je nach der Höhe der Flüssigkeitssäule, die den besagten Behälter belastet, dieser die besagten Öffnungen (27) freigibt oder nicht und somit respektive gestattet, die Flüssigkeit in das Reservoir (29) abzuleiten oder nicht.

2. Vorrichtung nach Anspruch 1, **dadurch gekennzeichnet, dass** sie dazu bestimmt ist, das auf ein Dach (11) fallende, in einer Traufe (10) gesammelte und durch ein Fallrohr (12) abgeleitete Regenwasser zurückzugewinnen.

3. System, das die Vorrichtung nach einem der Ansprüche 1 und 2, zusammen mit dem Fallrohrabschnitt (14) und den in diesen eingebauten, bzw. mit diesem verbundenen Elementen, d. h. dem Behälter (15), dem Trichter (26), respektive den Steuerungsmitteln (20, 21, 22, 23) umfasst, **dadurch gekennzeichnet, dass** der besagte Rohrabschnitt (14) vom übrigen Rohr trennbar ist.

4. Vorrichtung bzw. System nach einem der Ansprüche 1 bis 3, **dadurch gekennzeichnet, dass** die besagten Steuerungsmittel folgende Elemente umfassen :
- zwei starre, jeweils über eines ihrer Enden am Behälter (15) befestigte und aus der Wand des Fallrohrs (12, 14) durch je eine Öffnung (21) hindurch austretende horizontale Arme (20),
- zwei über eines ihrer Enden am jeweiligen anderen Ende der besagten Arme befestigte Spiralfedern (22), und
- eine fest mit dem Rohr verbundene feststehende Halterung (23), an der die Federn (22) mit ihrem jeweiligen anderen Ende befestigt sind.

5. Vorrichtung bzw. System nach Anspruch 4, **dadurch gekennzeichnet, dass** die Abmessungen der besagten Öffnungen (21) ziemlich genau dem Hubweg des Behälters (15) entsprechen.

6. Vorrichtung bzw. System nach einem der Ansprüche 4 und 5, **dadurch gekennzeichnet, dass** die Länge der Federn (22) in deren Ruhestellung verstellbar ist.

7. Vorrichtung bzw. System nach einem der Ansprüche 1 bis 6, **dadurch gekennzeichnet, dass** die Verbindung zwischen dem Trichter (26) und dem Behälter (15) eine Dichtung (18) umfasst.
